# EUROPEAN PATENT APPLICATION

(11) **EP 4 715 588 A1**
(43) Date of publication of application: **25.03.2026**
(21) Application number: 24830001.4
(22) Date of filing: 22.03.2024
(51) Int. Cl.: G06F 9/48, G06F 9/50, G06N 3/04

(54) **OPERATOR PROCESSING METHOD AND RELATED APPARATUS**

(30) Priority: 29.06.2023 CN 202310792403; 27.09.2023 CN 202311281657
(71) Applicant: Huawei Technologies Co., Ltd., Shenzhen, Guangdong 518129 (CN)
(72) Inventor: XIAO, Xiong, Shenzhen, Guangdong 518129 (CN); DENG, Lian, Shenzhen, Guangdong 518129 (CN); GUO, Xiaohui, Shenzhen, Guangdong 518129 (CN)
(74) Representative: Pfenning, Meinig & Partner mbB
(86) International application number: PCT/CN2024/083231
(87) International publication number: WO 2025/001349

(57) **Abstract**

This application provides an operator processing method, including: obtaining topology information of a computation graph, where the topology information records a plurality of operators included in the computation graph, graph input data, graph output data, graph intermediate data, and a dependency relationship between the plurality of operators; and constructing an operator execution queue based on the topology information of the computation graph. Each element in the operator execution queue corresponds to one operator and input data and output data of the operator, the input data of the operator is at least one of the graph input data or the graph intermediate data, the output data of the operator is at least one of the graph intermediate data or the graph output data, and an execution order of the plurality of operators is determined based on the dependency relationship between the plurality of operators. The method supports a user in constructing a graph in a user-defined manner based on operators and constructing an operator execution queue based on topology information of the computation graph. In this way, an execution graph is constructed in a form of the operator execution queue. The method can be flexibly applied to all scenarios in which operators need to be scheduled in batches, so that a service requirement is met.

## Description

This application claims priorities to Chinese Patent Application No. 202310792403.3, filed with the China National Intellectual Property Administration on June 29, 2023 and entitled "METHOD FOR EXECUTING COMPUTATION GRAPH", and to Chinese Patent Application No. 202311281657.5, filed with the China National Intellectual Property Administration on September 27, 2023 and entitled "OPERATOR PROCESSING METHOD AND RELATED APPARATUS", both of which are incorporated herein by reference in their entireties.

### TECHNICAL FIELD

This application relates to the field of computer technologies, and in particular, to an operator processing method and apparatus, a computer-readable storage medium, and a computer program product.

### BACKGROUND

An operator is a computing unit. For example, a binary operator is usually a computing unit that exists in a binary encoding form. The operator usually includes host (host) logic and device (device) logic. A host includes a central processing unit (central processing unit, CPU) and a host memory (host memory), and a device includes an external processing unit and a device memory (device memory). The external processing unit may be a neural network processing unit (neural network processing unit, NPU) or a graphics processing unit (Graphics Processing Unit, GPU). Different types of processors may implement different types of instruction set architectures.

Operator execution usually involves interaction between a host side and a device side. If input data of the operator is already in the device memory, main time consumption includes the following: The host side derives an output shape based on an input shape (Shape), applies for a memory on the device side, calculates a tiling parameter (tiling data) of the operator, transfers the tiling data to the device side, and delivers a computing task to the device side, and the device side executes the computing task.

In many service scenarios, for example, in a scenario of training a neural network, or in a scenario of performing inference based on a trained neural network, a plurality of operators are usually executed. When a plurality of operators are executed, a computation graph including the plurality of operators may be compiled into an intermediate representation (Intermediate Representation, IR) by using a compilation method, for example, by using a tensor virtual machine (Tensor Virtual Machine, TVM) or accelerated linear algebra (Accelerated Linear Algebra, XLA), where the IR is used to represent a description of an execution process, then an execution graph is generated, and operators are invoked in batches by using the execution graph.

However, in the method, a complex compilation optimization process is required, and the execution graph needs to be generated offline. The method is a heavyweight operator scheduling technology, and is inapplicable to some scenarios in which lightweight batch operator invoking is required, for example, is inapplicable to a scenario of implementing an acceleration library application programming interface (application programming interface, API).

### SUMMARY

This application provides an operator processing method. In the method, an operator execution queue is constructed based on topology information of a computation graph. In this way, an execution graph is constructed in a form of the operator execution queue. The method can be flexibly applied to all scenarios in which operators need to be scheduled in batches, so that a service requirement is met. This application further provides an operator processing apparatus, a computer-readable storage medium, and a computer program product that correspond to the operator processing method.

According to a first aspect, this application provides an operator processing method. The method may be performed by an operator processing apparatus. The operator processing apparatus may be a software apparatus. The software apparatus may be an independent software package or a cloud service such as a cloud service provided by using an interface (for example, a graph construction interface), and supports a user in constructing a graph in a user-defined manner based on operators, to represent a topology graph in a form of a queue. The software apparatus may be deployed in a computing device cluster (for example, a computing device executing an operator or a third-party computing device cluster), and the computing device cluster executes program code of the software apparatus to perform the operator processing method in this application. The operator processing apparatus may alternatively be a hardware apparatus, for example, a computing device or a computing device cluster that has an operator processing function. When the operator processing apparatus runs, the operator processing method in this application is performed.

Specifically, the operator processing apparatus obtains topology information of a computation graph, where the topology information records a plurality of operators included in the computation graph, graph input data, graph output data, graph intermediate data, and a dependency relationship between the plurality of operators; and then constructs an operator execution queue based on the topology information of the computation graph. Each element in the operator execution queue corresponds to one operator in the computation graph and input data and output data of the operator, the input data of the operator is at least one of the graph input data or the graph intermediate data, the output data of the operator is at least one of the graph intermediate data or the graph output data, and an execution order of the plurality of operators in the operator execution queue is determined based on the dependency relationship between the plurality of operators.

The method supports a user in constructing a graph in a user-defined manner based on operators and constructing an operator execution queue based on topology information of the computation graph. In this way, an execution graph is constructed in a form of the operator execution queue. The method can be flexibly applied to all scenarios in which operators need to be scheduled in batches, including a lightweight batch operator scheduling scenario such as acceleration library construction, so that a service requirement is met.

In some possible implementations, the operator processing apparatus may number the graph input data, the graph output data, and the graph intermediate data by partition. Each element in the operator execution queue records one operator in the computation graph, a number of input data of the operator, and a number of output data of the operator. In this way, a tensor number can be bound to an operator, and the tensor number is used as node information of the operator execution queue, and can be used as a tensor index in a graph execution process during subsequent operator execution.

In some possible implementations, the operator processing apparatus may determine a size of a graph workspace (which may also be referred to as a contextual environment in some cases) based on shape information of the graph input data and a correspondence between the operator corresponding to each element in the operator execution queue, the input data of the operator, and the output data of the operator. Then the operator processing apparatus may apply for a memory as the graph workspace based on the size of the graph workspace. The operator processing apparatus may apply for a device memory of a corresponding size as the graph workspace, or the operator processing apparatus may apply for a device memory of a size slightly greater than the foregoing size as the graph workspace, to prevent an insufficient graph workspace.

In the method, before an operator sequence is executed, a size of a graph workspace is first derived based on an input shape and a correspondence between an operator in an operator execution queue, input data, and output data, and a corresponding memory is applied for as the graph workspace based on the size. Therefore, a memory does not need to be applied for a plurality of times, so that a quantity of memory application times is reduced, and overall running efficiency is improved.

In some possible implementations, for graph intermediate data (for example, a graph intermediate tensor), after running of all operators depending on the graph intermediate data to use the graph intermediate data as an input ends, a life cycle of the graph intermediate data immediately ends. Shape information of the graph intermediate data is relatively large in a typical application scenario. On a premise that memory transfer is not considered, as much memory space as possible on a device side is reused to improve memory utilization. Based on this, the operator processing apparatus may obtain shape information of the graph intermediate data and dependency information of the graph intermediate data, where the dependency information indicates an operator depending on the graph intermediate data; and determine an offset address of the graph intermediate data in the graph workspace and a size of the graph intermediate data based on the shape information of the graph intermediate data and the dependency information of the graph intermediate data.

In the method, the offset address of the graph intermediate data in the graph workspace and the size of the graph intermediate data are determined based on the shape information of the graph intermediate data and the dependency information of the graph intermediate data, so that a memory can be reused for different graph intermediate data, thereby improving memory utilization.

In some possible implementations, the graph intermediate data includes first graph intermediate data and second graph intermediate data. When an operator depending on the first graph intermediate data is executed before an operator outputting the second graph intermediate data, an offset address of the first graph intermediate data is less than or equal to an offset address of the second graph intermediate data.

Because life cycles of the first graph intermediate data and the second graph intermediate data do not overlap, memory space of the first graph intermediate data can be reused for the second graph intermediate data, so that memory utilization is improved.

In some possible implementations, when shape information of the second graph intermediate data is less than or equal to shape information of the first graph intermediate data, the memory space of the first graph intermediate data may be directly reused for the second graph intermediate data. When the shape information of the second graph intermediate data is greater than the shape information of the first graph intermediate data, an offset address of third graph intermediate data following the first graph intermediate data may be adjusted, for example, the offset address of the third graph intermediate data is increased, to additionally reserve specific storage space to store the second graph intermediate data larger than the first graph intermediate data. In this way, the memory space of the first graph intermediate data is reused, so that memory utilization is improved.

In some possible implementations, for a tiling parameter (tiling data) of an operator, the tiling parameter usually needs to be loaded from a host side to specified device memory space before the operator is executed, and is no longer used after the operator is executed. To reduce a quantity of loading times, this application supports one-time loading of all. Specifically, the operator processing apparatus may further determine offset addresses of tiling parameters of the plurality of operators in the graph workspace and sizes of the tiling parameters of the plurality of operators, and load the tiling parameters of the plurality of operators to the graph workspace based on the offset addresses of the tiling parameters of the plurality of operators in the graph workspace and the sizes of the tiling parameters of the plurality of operators. In this way, overheads of loading the tiling parameter can be reduced, and resource utilization (for example, communication resource utilization) can be improved.

In some possible implementations, the graph workspace is further provided with a scratch memory. The operator processing apparatus may determine an offset address and a size of the scratch memory in the graph workspace based on a data amount of temporary data generated by execution of the plurality of operators. For example, the operator processing apparatus may determine, as the size of the scratch memory, a maximum value of the data amount of the temporary data generated by execution of the plurality of operators. In this way, the scratch memory can be reused.

In some possible implementations, a life cycle of a scratch memory (or temporary data) of an operator is from the start to the end of operator execution. Based on this, scratch memories of different operators may be reused. Specifically, scratch memories of the plurality of operators may be set to have a same offset address. In this way, memory space can be reused for scratch memories of different operators, so that memory utilization is improved.

In some possible implementations, the operator processing apparatus may asynchronously execute different computation graphs. Specifically, when the device side (for example, an NPU on the device side) still performs computation, the operator processing apparatus may prepare a computing resource of a next computation graph in advance. In this way, a waiting time on the device side can be reduced, and an operator throughput can be increased.

In some possible implementations, the computation graph includes a first computation graph and a second computation graph, operators included in the first computation graph are the same as operators included in the second computation graph, a dependency relationship between the operators in the first computation graph is the same as a dependency relationship between the operators in the second computation graph, and shape information of data in the first computation graph is the same as shape information of data in the second computation graph. Correspondingly, when executing the first computation graph, the operator processing apparatus may adjust an address of the graph input data to an address of graph input data of the second computation graph.

In this way, execution of the first computation graph is completed, and the operator processing apparatus can directly reuse a graph workspace of the first computation graph to execute the second computation graph. In the method, different computation graphs are asynchronously executed, so that an operator throughput on the device side is increased, and an overall running speed is improved.

In some possible implementations, at least one of the plurality of operators is a compiled operator, for example, a binary operator. The binary operator is a computing unit that exists in a binary encoding form, and can be executed on the device side without compilation. The computation graph is constructed by using the at least one compiled operator, so that compilation time consumption can be reduced, and lightweight compilation can be implemented. When all computation graphs use compiled operators, even no compilation time consumption can be implemented. In this way, lightweight operator scheduling can be implemented.

According to a second aspect, this application provides an operator processing apparatus. The apparatus includes:
an obtaining module, configured to obtain topology information of a computation graph, where the topology information records a plurality of operators included in the computation graph, graph input data, graph output data, graph intermediate data, and a dependency relationship between the plurality of operators; and
a construction module, configured to construct an operator execution queue based on the topology information of the computation graph, where each element in the operator execution queue corresponds to one operator in the computation graph and input data and output data of the operator, the input data of the operator is at least one of the graph input data or the graph intermediate data, the output data of the operator is at least one of the graph intermediate data or the graph output data, and an execution order of the plurality of operators in the operator execution queue is determined based on the dependency relationship between the plurality of operators.

In some possible implementations, the construction module is further configured to:
number the graph input data, the graph output data, and the graph intermediate data by partition, where
each element in the operator execution queue records one operator in the computation graph, a number of input data of the operator, and a number of output data of the operator.

In some possible implementations, the apparatus further includes:
a memory planning module, configured to: determine a size of a graph workspace based on shape information of the graph input data and a correspondence between the operator corresponding to each element in the operator execution queue, the input data of the operator, and the output data of the operator; and apply for a memory as the graph workspace based on the size of the graph workspace.

In some possible implementations, the memory planning module is further configured to:
obtain shape information of the graph intermediate data and dependency information of the graph intermediate data, where the dependency information indicates an operator depending on the graph intermediate data; and determine an offset address of the graph intermediate data in the graph workspace and a size of the graph intermediate data based on the shape information of the graph intermediate data and the dependency information of the graph intermediate data.

In some possible implementations, the graph intermediate data includes first graph intermediate data and second graph intermediate data, and when an operator depending on the first graph intermediate data is executed before an operator outputting the second graph intermediate data, an offset address of the first graph intermediate data is less than or equal to an offset address of the second graph intermediate data.

In some possible implementations, the memory planning module is further configured to:
determine offset addresses of tiling parameters of the plurality of operators in the graph workspace and sizes of the tiling parameters of the plurality of operators; and
load the tiling parameters of the plurality of operators to the graph workspace based on the offset addresses of the tiling parameters of the plurality of operators in the graph workspace and the sizes of the tiling parameters of the plurality of operators.

In some possible implementations, the graph workspace is further provided with a scratch memory; and
the memory planning module is further configured to:
determine an offset address and a size of the scratch memory in the graph workspace based on a data amount of temporary data generated by execution of the plurality of operators.

In some possible implementations, scratch memories of the plurality of operators have a same offset address.

In some possible implementations, the computation graph includes a first computation graph and a second computation graph, operators included in the first computation graph are the same as operators included in the second computation graph, a dependency relationship between the operators in the first computation graph is the same as a dependency relationship between the operators in the second computation graph, and shape information of data in the first computation graph is the same as shape information of data in the second computation graph; and
the apparatus further includes:
an adjustment module, configured to: when the first computation graph is executed, adjust an address of the graph input data to an address of graph input data of the second computation graph.

According to a third aspect, this application provides an operator processing apparatus. The operator processing apparatus includes at least one processor and at least one storage. The at least one processor and the at least one storage communicate with each other. The at least one processor is configured to execute instructions stored in the at least one storage, so that the operator processing apparatus performs the operator processing method according to any one of the first aspect or the implementations of the first aspect.

According to a fourth aspect, this application provides a computer-readable storage medium. The computer-readable storage medium stores instructions, and the instructions instruct a computing device or a computing device cluster to perform the operator processing method according to any one of the first aspect or the implementations of the first aspect.

According to a fifth aspect, this application provides a computer program product including instructions. When the computer program product runs on a computing device or a computing device cluster, the computing device or the computing device cluster is enabled to perform the operator processing method according to any one of the first aspect or the implementations of the first aspect.

In this application, the implementations provided in the foregoing aspects may be further combined to provide more implementations.

### BRIEF DESCRIPTION OF DRAWINGS

To describe the technical methods in embodiments of this application more clearly, the following briefly describes the accompanying drawings used in embodiments.
FIG. 1 is a schematic flowchart of operator scheduling according to an embodiment of this application;
FIG. 2 is a diagram of a hardware structure of a server according to an embodiment of this application;
FIG. 3 is a flowchart of an operator processing method according to an embodiment of this application;
FIG. 4 is a diagram of a graph construction interface according to an embodiment of this application;
FIG. 5 is a diagram of constructing an operator execution queue based on a computation graph according to an embodiment of this application;
FIG. 6 is a diagram in which an operator processing apparatus applies for a memory as a graph workspace according to an embodiment of this application;
FIG. 7 is a diagram of planning a tiling parameter and an offset address and a size of a scratch memory in a graph workspace according to an embodiment of this application;
FIG. 8 is a diagram of planning an offset address and a size of graph intermediate data in a graph workspace according to an embodiment of this application;
FIG. 9 is a diagram of updating a data pointer of graph intermediate data and a pointer of a graph workspace to execute a computation graph according to an embodiment of this application;
FIG. 10 is a diagram of identifying graph intermediate data and updating a data pointer of the graph intermediate data according to an embodiment of this application;
FIG. 11 is a schematic flowchart of executing different computation graphs in parallel according to an embodiment of this application; and
FIG. 12 is a diagram of a structure of an operator processing apparatus according to an embodiment of this application.

### DESCRIPTION OF EMBODIMENTS

Terms "first" and "second" in embodiments of this application are used only for description purposes, and cannot be understood as an indication or an implication of relative importance or an implicit indication of a quantity of indicated technical features. Therefore, a feature limited by "first" or "second" may explicitly or implicitly include one or more such features.

First, some technical terms involved in embodiments of this application are described.

An operator (operator, OP) is an operation performed on data. Operators may be classified into a computing operator (for example, a convolution operator Conv2D and a max pooling operator MaxPool) and a communication operator (for example, a gathering operator AllGather and a broadcast operator Broadcast) based on different operation types. The operator (for example, a heterogeneous operator) may include host (host) logic and device (device) logic. A host includes a CPU and a host memory. A device includes an external processing unit (for example, an NPU or a GPU) and a device memory. The host logic may include logic for generating an execution graph (which may also be referred to as a running graph). The execution graph may be an operator (kernel) sequence that can be directly executed on the device. The device logic may include logic for running the execution graph.

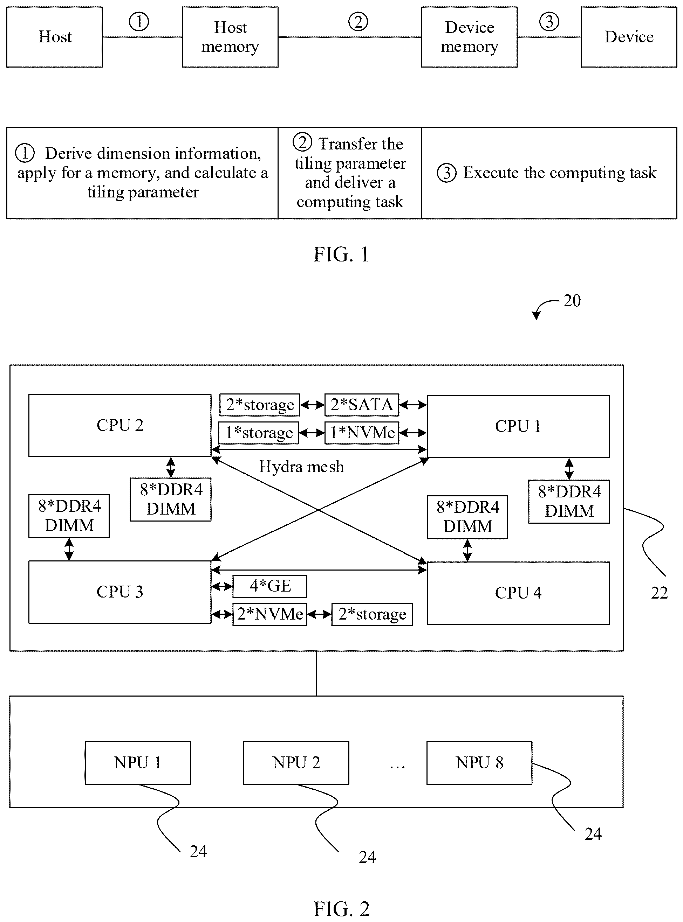

Operator scheduling refers to a process of controlling operator execution, and includes actions such as data preparation, task delivery, and computation result obtaining. Operator scheduling involves interaction between the host side and device side. As shown in FIG. 1, if input data of the operator is already in the device memory, main scheduling time consumption includes the following: The host side derives output shape information (which may also be referred to as an output shape) based on input shape (Shape) information, applies for a memory on the device side, calculates a tiling parameter (tiling data) of the operator, transfers the tiling data to the device, and delivers a computing task to the device, and the device side executes the computing task.

Batch operator scheduling needs to be performed in many service scenarios. For example, in a scenario of training a neural network, or in a scenario of performing inference based on a trained neural network, a plurality of operators usually need to be scheduled in batches. An operator scheduling method compiled based on artificial intelligence (artificial intelligence, AI) supports batch operator scheduling. Specifically, a computation graph including a plurality of operators is compiled into an intermediate representation (Intermediate Representation, IR) by using a tensor virtual machine (Tensor Virtual Machine, TVM) or accelerated linear algebra (Accelerated Linear Algebra, XLA), then an execution graph may be generated based on the IR, and operators are invoked in batches by using the execution graph.

However, in the method, a complex compilation optimization process is required. A graph fusion process is complex, and the execution graph needs to be generated offline. The method is a heavyweight operator scheduling technology, and is inapplicable to some scenarios in which lightweight batch operator invoking is required, for example, is inapplicable to a scenario of implementing an acceleration library application programming interface (application programming interface, API).

In view of this, this application provides an operator processing method. The method may be performed by an operator processing apparatus. The operator processing apparatus may be a software apparatus. The software apparatus may be an independent software package or a cloud service such as a cloud service provided by using an interface (for example, a graph construction interface), and supports a user in constructing a graph in a user-defined manner based on operators, to represent a topology graph in a form of a queue. The software apparatus may be deployed in a computing device cluster (for example, a computing device executing an operator or a third-party computing device cluster), and the computing device cluster executes program code of the software apparatus to perform the operator processing method in this application. The operator processing apparatus may alternatively be a hardware apparatus, for example, a computing device or a computing device cluster that has an operator processing function. When the operator processing apparatus runs, the operator processing method in this application is performed.

Specifically, the operator processing apparatus obtains topology information of a computation graph, where the topology information records a plurality of operators included in the computation graph, graph input data, graph output data, graph intermediate data, and a dependency relationship between the plurality of operators; and then constructs an operator execution queue based on the topology information of the computation graph. Each element in the operator execution queue corresponds to one operator in the computation graph and input data and output data of the operator, the input data of the operator is at least one of the graph input data or the graph intermediate data, the output data of the operator is at least one of the graph intermediate data or the graph output data, and an execution order of the plurality of operators in the operator execution queue is determined based on the dependency relationship between the plurality of operators.

The method supports a user in constructing a graph in a user-defined manner based on operators and constructing an operator execution queue based on topology information of the computation graph. In this way, an execution graph is constructed in a form of the operator execution queue. The method can be flexibly applied to all scenarios in which operators need to be scheduled in batches, including a lightweight batch operator scheduling scenario such as acceleration library construction, so that a service requirement is met.

The operator processing method in this application may be applied to a scenario in which operators need to be invoked in batches to complete a computing task. Typical scenarios include construction of various acceleration library APIs or construction of a large model inference acceleration library. Construction of the acceleration API includes construction of a deep neural network (Deep Neural Network, DNN) acceleration library API, and the large model inference acceleration library may include various large language models (large language model, LLM), especially a session language model.

The operator processing apparatus that performs the operator processing method may be implemented by using a computing device or a computing device cluster. For example, the computing device or the computing device cluster may perform the operator processing method in this application when constructing the large model inference acceleration library. The computing device may be a server or a terminal. The server may be a cloud server in a cloud environment or an on-premises physical server. The terminal may include but is not limited to a desktop computer, a notebook computer, or a smartphone. The computing device may use a single-node single-card architecture, or a single-node multi-card architecture, and the computing device cluster may use a multi-node multi-card architecture. It should be noted that in "x-node x-card", "node" represents a host, and "card" represents a device such as an accelerator card. The accelerator card may include but is not limited to a GPU or an NPU. The following uses an example in which the computing device is a server for description.

Refer to a diagram of a hardware structure of a server shown in FIG. 2. The server 20 includes a host 22 and at least one device 24. The host 22 is connected to the at least one device 24.

The host 22 includes a processor and a memory. The processor may be a central processing unit (central processing unit, CPU), and the memory may be a dual in-line memory module (Dual In-line Memory Module, DIMM). The DIMM may be specifically of a double data rate (double data rate, DDR) type. For example, the memory may be a DDR4 DIMM. In the example of FIG. 2, the host 22 includes four CPUs and four DDR4 DIMM groups, each CPU is connected to one DDR4 DIMM group, and each DDR4 DIMM group includes eight DDR4 DIMMs. The plurality of CPUs of the host 22 may be connected to form a hydra mesh.

Optionally, the host 22 further includes an interface, for example, one or more of a serial advanced technology attachment (Serial Advanced Technology Attachment, SATA) interface, a new generation non-volatile memory (Non-Volatile Memory express, NVMe) interface, and a gigabit Ethernet (Gigabit Ethernet, GE) interface. The host 22 may further include a storage. The storage may include a SATA supporting storage or an NVMe supporting storage, for example, a SATA supporting mechanical hard disk drive or an NVMe supporting solid-state drive (solid-state drive, SSD).

The device 24 includes an accelerator card, for example, an NPU or a GPU. An example in which a device side includes eight NPUs is used for description in FIG. 2. In another possible implementation of this embodiment of this application, the device side may alternatively include more accelerator cards, for example, a larger quantity of accelerator cards or more types of accelerator cards.

When the device side includes a plurality of accelerator cards, the plurality of accelerator cards may concurrently execute a plurality of operators. The plurality of operators include a communication operator, and the plurality of accelerator cards may directly exchange data by using the communication operator, to concurrently execute the plurality of operators. When the device side includes one accelerator card, the accelerator card may independently execute a plurality of operators.

To make the technical solutions of this application clearer and easier to understand, the following describes the operator processing method in this application with reference to the accompanying drawings.

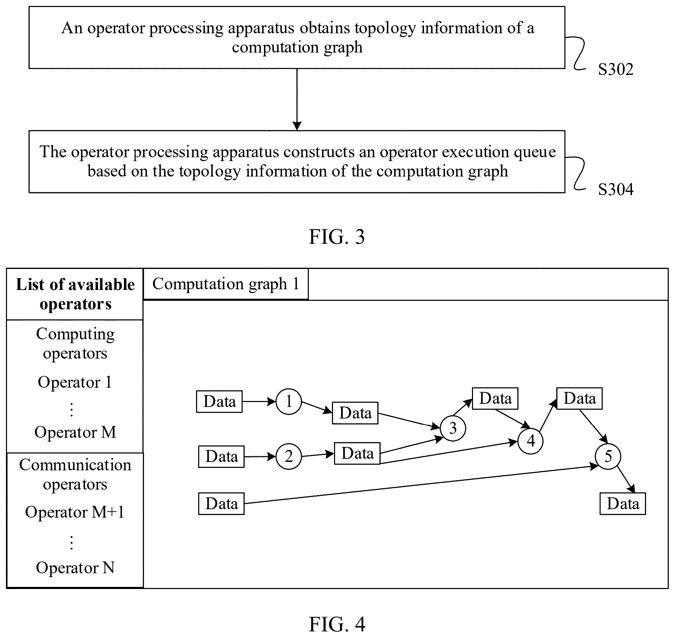

Refer to a flowchart of an operator processing method shown in FIG. 3. The method may be performed by an operator processing apparatus. The operator processing apparatus may be a software apparatus, for example, a software apparatus deployed on a host side or a software apparatus deployed in a computing device cluster, and is configured to construct, as an operator execution queue for execution on a device side, a plurality of operators that need to be scheduled in batches. It should be noted that when the operator processing apparatus is a software apparatus deployed in a computing device cluster, a computing device executing the operator may invoke an interface of the software apparatus to obtain the operator execution queue, and execute the plurality of operators on the device side based on the operator execution queue. The operator processing apparatus may alternatively be a hardware apparatus, for example, a host on a computing device side or a computing device cluster. The method includes the following steps.

S302. The operator processing apparatus obtains topology information of a computation graph.

The computation graph is a topology graph describing a computation process. The computation graph usually includes an operator involved in the computation process, input data of the operator, and output data of the operator. For the computation graph as a whole, the topology information of the computation graph records a plurality of operators included in the computation graph, graph input data, graph output data, graph intermediate data, and a dependency relationship between the plurality of operators. The graph input data may be input data of several operators in the plurality of operators included in the computation graph, and the graph output data may be output data of several operators in the plurality of operators included in the computation graph. The graph intermediate data may be output data of some (or one) operators in the plurality of operators included in the computation graph and input data of other (or another) operators in the plurality of operators. The input data and the output data of the operator or the graph input data, the graph output data, and graph intermediate data may be tensors (tensor). The tensor may be an array with any integer shape and various attributes describing the array, and the attributes include but are not limited to shape (shape) information, a data type, a device type, a data format, a memory address, and the like.

The computation graph may be constructed by a user in a user-defined manner. Specifically, the operator processing apparatus may provide a graph construction interface. The graph construction interface may be a graphical user interface (graphical user interface, GUI), a command user interface (command user interface, CUI), or an API. The user may define the computation graph by using the graph construction interface. For ease of description, an example in which the graph construction interface is the GUI is used for description.

Refer to a diagram of a graph construction interface shown in FIG. 4. The graph construction interface provides a plurality of operators used to construct a computation graph. The user may add, to a graph construction area through dragging and dropping or the like, a plurality of operators that need to be scheduled in batches. Further, the user may view input data and output data of the plurality of operators, and determine a dependency relationship between the plurality of operators based on the input data and the output data of the plurality of operators. The user may connect the plurality of operators based on the dependency relationship. In this way, the computation graph is constructed in a user-defined manner. Correspondingly, the operator processing apparatus may obtain topology information of the computation graph.

S302. The operator processing apparatus constructs an operator execution queue based on the topology information of the computation graph.

The operator execution queue is a queue used to execute an operator. Each element in the operator execution queue corresponds to one operator in the computation graph and input data and output data of the operator. The input data of the operator is at least one of the graph input data or the graph intermediate data, the output data of the operator is at least one of the graph intermediate data or the graph output data, and an execution order of the plurality of operators in the operator execution queue is determined based on the dependency relationship between the plurality of operators.

Specifically, the operator processing apparatus may sort the plurality of operators based on the dependency relationship between the plurality of operators, and then sequentially add the plurality of operators to the operator execution queue. Each operator may correspond to one element in the operator execution queue. The element in the operator execution queue further records input data and output data of the operator.

In some possible implementations, the operator execution queue may be a first in first out (First Input First Output, FIFO) queue. Correspondingly, the operator processing apparatus may first add an operator to be executed first to the FIFO queue, to ensure that the execution order of the operators can meet the dependency relationship between the operators.

The operator processing apparatus further supports the graph input data, the graph output data, and the graph intermediate data being numbered by partition. Correspondingly, each element in the operator execution queue records one operator in the computation graph, a number of input data of the operator, and a number of output data of the operator, so that the operator in the computation graph and the input data and the output data of the operator are recorded.

Further, the operator in the operator execution queue may include at least one compiled operator. For example, the operator in the operator execution queue may be a binary operator. The binary operator is a computing unit that exists in a binary encoding form, and can be executed on the device side without compilation. When all the operators in the operator execution queue are binary operators, the operator sequence may also be referred to as a kernel sequence. In this way, a problem of an excessively heavyweight AI compilation process can be resolved, and operator scheduling can be implemented through lightweight compilation or even without compilation.

For ease of understanding, the following provides descriptions with reference to an example.

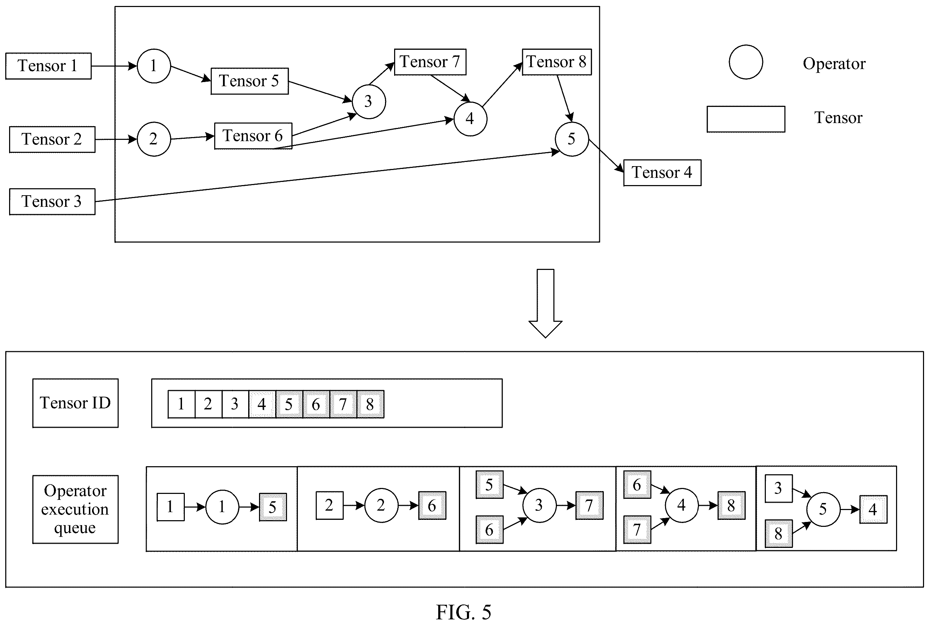

As shown in FIG. 5, the computation graph includes the following binary operators: OP1 to OP5. The computation graph further records graph input tensors (InTensor), a graph output tensor (OutTensor), and graph intermediate tensors (InterTensor). The graph input tensors are input tensors of OP1, OP2, and OP5. The graph output tensor is an output tensor of OP5. The graph intermediate tensors include output tensors of OP1 and OP2 (the output tensor of OP1 is also an input tensor of OP3, and the output tensor of OP2 is also input tensors of OP3 and OP4), the graph intermediate tensors further include an output tensor of OP3 (the output tensor of OP3 is also an input tensor of OP4) and an output tensor of OP4 (the output tensor of OP4 is also an input tensor of OP5).

The graph input tensors, the graph output tensor, and the graph intermediate tensors may be numbered by partition. For example, the graph input tensors may be numbered 1 to 3, the graph output tensor may be numbered 4, and the graph intermediate tensors may be numbered 5 to 8. The operator processing apparatus determines, based on the dependency relationship between the operators in the topology information, that OP1 and OP2 are executed before OP3, OP3 is executed before OP4, and OP4 is executed before OP5. Therefore, OP1 to OP5 may be sequentially added to the operator execution queue, and tensor numbers of input tensors and output tensors of the operators are bound to the operators, and are used as node information of the FIFO queue. The tensor numbers of the input tensors and the output tensors of the operators may be used as tensor indices during graph execution.

It should be noted that in the foregoing example, OP2 may alternatively be added to the operator execution queue before OP1. In other words, OP2 may alternatively be executed before OP1. In addition, the operator execution queue may alternatively be another type of queue. This is not limited in this embodiment. When the operators are concurrently executed on a plurality of devices, the operators in the operator execution queue may include a communication operator, and the communication operator is used to exchange data between different devices (for example, different NPUs).

Based on the foregoing content descriptions, it can be learned that the operator processing method in this application supports a user constructing a graph in a user-defined manner, and an operator execution queue may be constructed based on topology information of the constructed computation graph, so that an execution graph is executed in a form of the operator execution queue. In this way, the operator processing method can be flexibly applied to all scenarios in which batch operator scheduling is required, so that a service requirement is met.

Further, in this application, a memory layout of internal computing resources of the computation graph can be planned in advance based on input data and the operator execution queue, and memory reusing is performed based on a life cycle of the internal computing resources, so that memory utilization is improved, and overall memory consumption is greatly reduced. In addition, the method supports a large memory block in being applied for at a time, to reduce a quantity of memory application times and improve overall running efficiency. The following describes the resource planning process in detail.

To execute an operator, input data (for example, an input tensor InTensors), output data (for example, OutTensors), a tiling parameter (tiling data), and a scratch memory (scratch memory) are usually required. The tiling parameter is a parameter used to tile the input data, and the tiling parameter may include a total parameter length (totalLength), a quantity of tiles (for example, a quantity of times a single core cyclically processes data, denoted as tileNum), and a computation scalar (for example, LeakyRelu scalar). The scratch memory is used to temporarily store temporary data generated during operator execution. A user of a graph usually focuses on a graph input tensor, a graph output tensor, and a graph workspace (GraphWorkspace). Therefore, a graph intermediate tensor, tiling data, and a scratch memory need to be placed in the graph workspace together, where the graph intermediate tensor, the tiling data, and the scratch memory are transferred from the outside of the graph.

The graph workspace is a workspace (workspace) for graph execution. The workspace may also be referred to as a contextual environment or a session (session). The computation graph needs to be executed in a context of a session. The session provides an environment for operator execution and tensor evaluation. A session may have some resources such as a variable (variable) or a queue (queue). When the session is no longer required, sess.close() may be invoked to close the session (or a context manager is used to automatically close the session) to release resources. If there are a plurality of to-be-executed computation graphs, different sessions may be created to load the computation graphs. Each computation graph may be loaded to a plurality of sessions for computation. The sessions are independent of each other.

Based on this, the operator processing apparatus may determine a size (size) of the graph workspace based on shape information of the graph input data and a correspondence between the operator corresponding to each element in the operator execution queue, the input data of the operator, and the output data of the operator; and apply for a memory as the graph workspace based on the size of the graph workspace.

The operator processing apparatus may perform chain derivation based on the shape information of the graph input data (for example, the graph input tensor) and a correspondence between the input data and the output data of the operator, to derive shape information of the graph intermediate tensor, and further obtain a size of a memory for storing the graph intermediate tensor. In addition, the operator processing apparatus may further derive a data amount of the temporary data generated in the execution process, to estimate a size of the scratch memory. The operator processing apparatus may obtain the size of the entire graph workspace based on the size of the memory for storing the graph intermediate tensor, the size of the scratch memory, and a size of the memory for storing the tiling parameter. It should be noted that the graph workspace may be further divided into an operator workspace (OpWorkspace) and a graph intermediate data area. The operator workspace includes a tiling parameter area and the scratch memory. The tiling parameter area is used to store the tiling parameter, and the scratch memory is used to store the temporary data generated in the operator execution process.

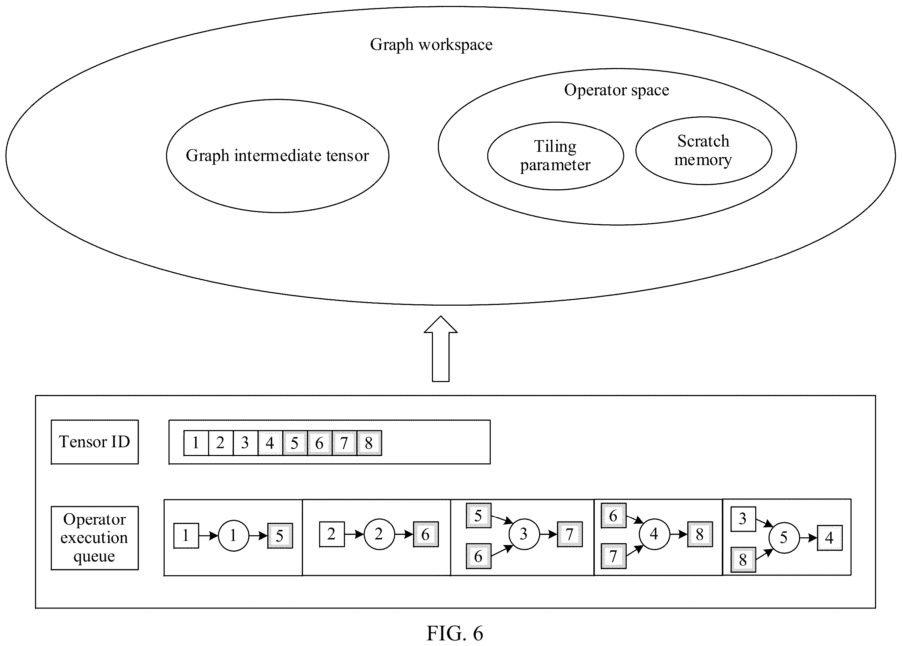

FIG. 6 is used as an example for description. The operator processing apparatus may perform chain derivation on the shape information of the graph intermediate tensor based on the shape information of the graph input tensor (for example, tensor IDs are 1, 2, and 3), to obtain the size of the memory required for storing the graph intermediate tensor. In addition, the operator processing apparatus may further derive a size of a memory required for a tiling parameter of each operator and a size of a scratch memory for temporarily storing temporary data generated in a process of executing the operator. The operator processing apparatus may predict the size of the graph workspace based on the size of the memory required for storing the graph intermediate tensor, the size of the memory required for storing the tiling parameter, and the size of the scratch memory, and apply to the device side for a memory block of a corresponding size as the graph workspace. It should be noted that the operator processing apparatus may alternatively apply for a memory block of a size slightly greater than the foregoing size as the graph workspace.

The following separately describes memory planning of the tiling parameter, the scratch memory, and the graph intermediate data.

For a tiling parameter (tiling data) of an operator, the tiling parameter usually needs to be loaded from the host side to specified device memory space before the operator is executed, and is no longer used after the operator is executed. To reduce a quantity of loading times, this application supports one-time loading of all. Correspondingly, a life cycle of the tiling parameter may be equivalent to a life cycle of the graph. For a scratch memory (scratch memory) of an operator, a life cycle of the scratch memory may be a period of time from the start to the end of execution of the corresponding operator. Based on this, scratch memories of a plurality of operators may be reused.

During specific implementation, the operator processing apparatus may determine offset addresses (denoted as offsets) of tiling parameters of the plurality of operators in the graph workspace and sizes (size) of the tiling parameters of the plurality of operators, and load the tiling parameters of the plurality of operators to the graph workspace based on the offset addresses of the tiling parameters of the plurality of operators in the graph workspace and the sizes of the tiling parameters of the plurality of operators. For the scratch memory, the operator processing apparatus may determine an offset address and a size of the scratch memory in the graph workspace based on a data amount of temporary data generated by execution of the plurality of operators. The size of the scratch memory may be a maximum value of the data amount of the temporary data. When the operator is executed, the offset address and the size of the scratch memory in the graph workspace are transferred to the graph workspace, so that the temporary data generated during operator execution can be stored in a corresponding location or area. It should be noted that the scratch memories of the plurality of operators may have a same offset address. In this way, memory reusing can be implemented, and memory overheads can be reduced.

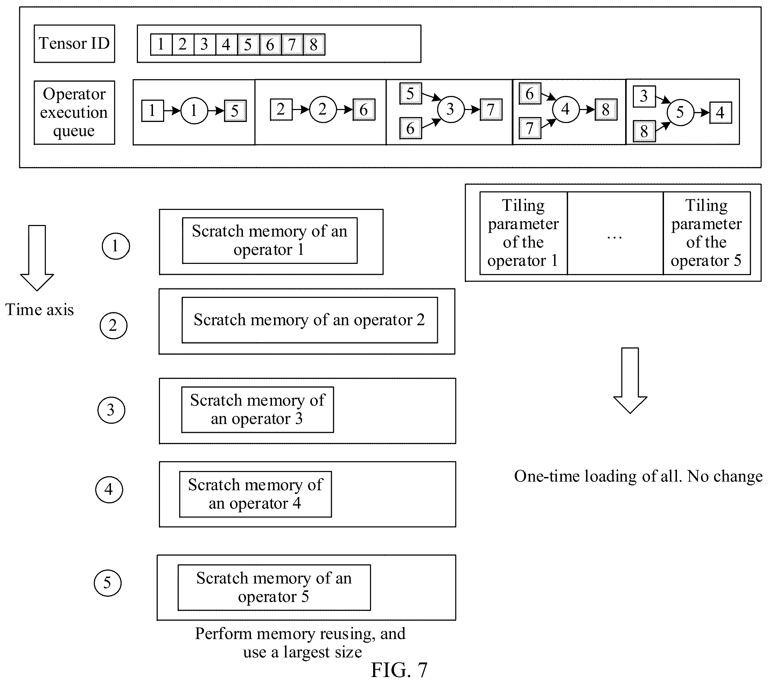

FIG. 7 is used as an example for description. The tiling data of the operator occupies less memory space on the device side. To reduce a quantity of times of loading the op tiling data, the tiling data of all the operators in the operator execution queue may be loaded at a time. The tiling data of all the operators may be placed at a start address of the graph workspace. In other words, the offset of the tiling data may be equal to the offset of the graph workspace. A size of the tiling data area may be equal to a sum of the sizes of the tiling data of all the operators in the operator execution queue. A scratch memory of each operator is no longer used after execution of the operator ends. Therefore, a scratch memory of a current operator may be reused when a subsequent operator is executed. Therefore, the scratch memories of all the operators in the graph workspace have a same offset, but have different sizes. Only a largest size needs to be used.

The operator processing apparatus may scan the operator execution queue, and write offsets and sizes of tiling data and a scratch memory of each operator into running information (denoted as runInfo) of the operator for use in subsequent execution of the operator.

For graph intermediate data (for example, a graph intermediate tensor), after running of all operators depending on the graph intermediate data to use the graph intermediate data as an input ends, a life cycle of the graph intermediate data immediately ends. Shape information of the graph intermediate data is relatively large in a typical application scenario. On a premise that memory transfer is not considered, as much memory space as possible on the device side is reused to improve memory utilization.

Specifically, the operator processing apparatus may obtain shape information of the graph intermediate data and dependency information of the graph intermediate data, where the dependency information indicates an operator depending on the graph intermediate data; and then the operator processing apparatus may determine an offset address of the graph intermediate data in the graph workspace and a size of the graph intermediate data based on the shape information of the graph intermediate data and the dependency information of the graph intermediate data.

The operator processing apparatus may determine a life cycle of each piece of graph intermediate data based on the dependency information of the graph intermediate data, and then the operator processing apparatus may determine an arrangement of the graph intermediate data in a memory based on the shape information of the graph intermediate data and the life cycle of each piece of graph intermediate data, to obtain the offset address of the graph intermediate data in the graph workspace and the size of the graph intermediate data. For example, the graph intermediate data includes first graph intermediate data and second graph intermediate data, and when an operator depending on the first graph intermediate data is executed before an operator outputting the second graph intermediate data, an offset address of the first graph intermediate data is less than or equal to an offset address of the second graph intermediate data. In other words, memory space of the first graph intermediate data may be reused for the second graph intermediate data.

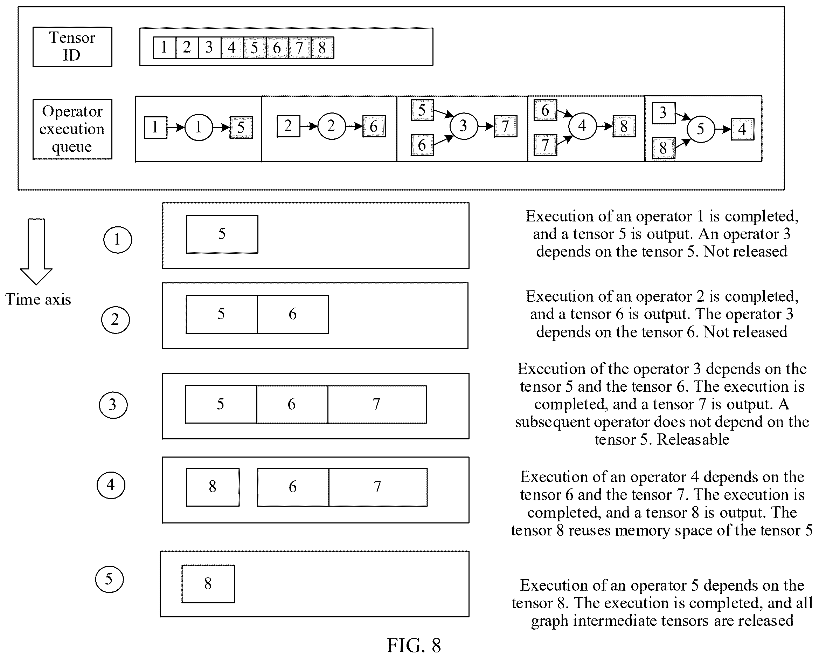

FIG. 8 is used as an example for description. Execution of OP1 is completed, and a graph intermediate tensor (namely, a tensor 5) is output. Subsequent OP3 depends on the tensor 5. Therefore, memory space of the tensor 5 is not released. Execution of OP2 is completed, and a graph intermediate tensor (namely, a tensor 6) is output. Subsequent OP3 depends on the tensor 6. Therefore, memory space of the tensor 6 is not released. In this case, the memory space of the tensor 5 and the tensor 6 is not released. Execution of OP3 depends on the tensor 5 and the tensor 6. The execution is completed, and a graph intermediate tensor (namely, a tensor 7) is output. In this case, a subsequent operator does not depend on the tensor 5, and the memory space of the tensor 5 is releasable. Execution of OP3 depends on the tensor 6 and the tensor 7. The execution is completed, and a graph intermediate tensor (namely, a tensor 8) is output. Memory space used by the tensor 8 is less than the memory space used by the tensor 5, and the tensor 8 may reuse the memory space of the tensor 5. Based on this, the operator processing apparatus may configure an offset of the tensor 8 to be equal to an offset of the tensor 5. In another possible implementation of this embodiment of this application, the operator processing apparatus may alternatively configure the offset of the tensor 8 to be greater than (for example, slightly greater than) the offset of the tensor 5, in other words, the offset of the tensor 5 is less than the offset of the tensor 8, to implement memory reusing of the tensor 5 and the tensor 8. After execution of OP5 is completed, memory space of all graph intermediate tensors is releasable.

When a memory used by the tensor 8 is greater than a memory used by the tensor 5, for example, the memory used by the tensor 8 is slightly greater than the memory used by the tensor 5, the memory space of the tensor 5 cannot be reused, and the memory space can only be expanded rightwards. To avoid the case, the operator processing apparatus may merge adjacent free blocks (namely, memory blocks whose tensors are released), and select a block that is of a smallest size and that meets a requirement as much as possible each time, for example, select, by using a BestFit algorithm, the block that is of the smallest size and that meets the requirement for reusing, to preserve as many larger blocks as possible and improve a memory reusing rate. In addition, the operator processing apparatus may further perform planning in advance based on global information, for example, shift start addresses of the tensor 6 and the tensor 7 rightwards in advance, so that subsequently, after the tensor 5 is released, the tensor 8 can be placed after adjacent fragments are merged.

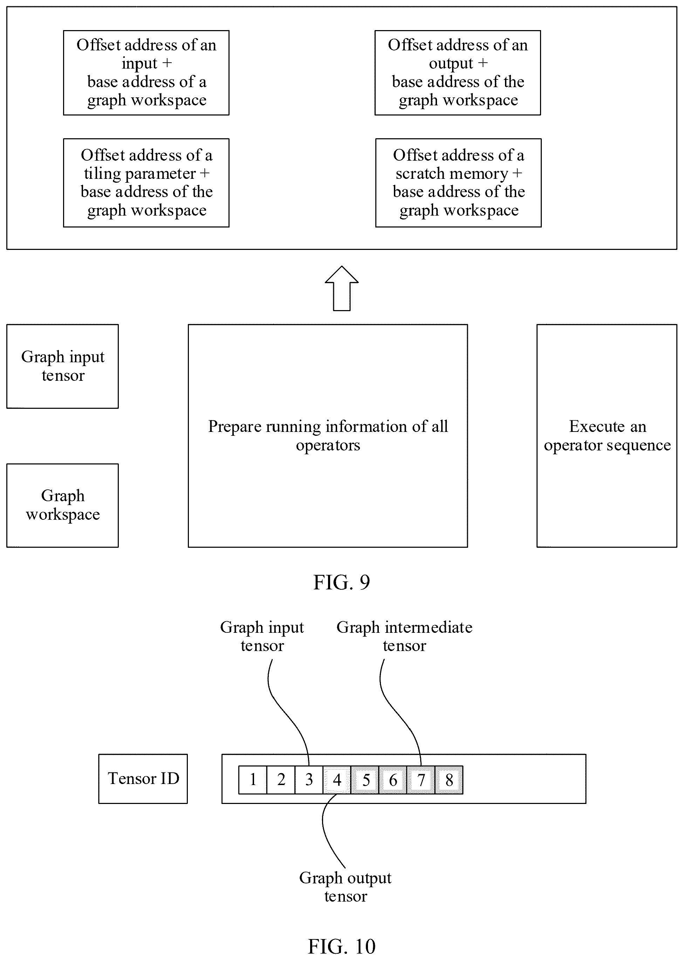

After the foregoing memory planning is completed, the operator execution queue may be executed (this process is also referred to as graph execution). As shown in FIG. 9, running information runInfo of the operators in the operator execution queue needs to be prepared before the operators are executed. A main procedure is to update a data pointer of the graph intermediate tensor and a workspace pointer of the operator. During memory planning, the operator processing apparatus has stored an offset of each resource block. Based on this, when updating a pointer (the data pointer and the workspace pointer), the operator processing apparatus only needs to add, to the offset, a base address a workspace memory transferred from the outside.

Further, referring to FIG. 10, in an update process, the operator processing apparatus may determine, based on an area of a tensor in a tensor table of the graph, whether an input tensor and an output tensor of each operator are graph intermediate tensors. Because data pointers of a graph input tensor and a graph output tensor do not need to be updated, and addresses are actual, the foregoing update operation may not be performed. The operator processing apparatus may perform the foregoing update operation when determining that the input tensor and the output tensor of the operator are graph intermediate tensors.

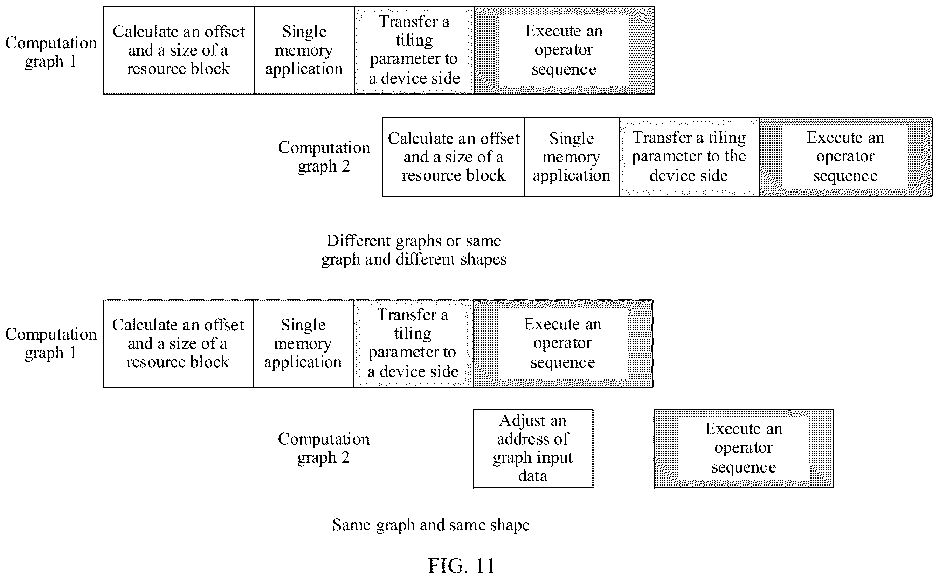

In some possible implementations, the operator processing apparatus may support parallel execution of computation graphs. The operator processing apparatus may asynchronously perform graph computing. When the device side (for example, an NPU on the device side) still performs computation, the operator processing apparatus prepares a computing resource of a next computation graph in advance. This reduces a waiting time on the device side, and increases an operator throughput. Referring to FIG. 11, in scenarios of different graphs or a same graph and different shapes, when the host side transfers tiling data of a computation graph 1 (graph 1) to the device side, the operator processing apparatus may asynchronously perform resource planning for a computation graph 2 (graph 2), for example, calculate an offset and a size of a resource block.

Further, for a scenario of a same graph and a same shape, this application further supports reusing of a graph workspace. Specifically, the computation graph includes a first computation graph (for example, a graph 1) and a second computation graph (for example, a graph 2), operators included in the first computation graph are the same as operators included in the second computation graph, a dependency relationship between the operators in the first computation graph is the same as a dependency relationship between the operators in the second computation graph, and shape information of data in the first computation graph is the same as shape information of data in the second computation graph. When executing the first computation graph, the operator processing apparatus may adjust an address of the graph input data to an address of graph input data of the second computation graph. In this way, execution of the first computation graph is completed, and the operator processing apparatus can directly reuse a graph workspace of the first computation graph to execute the second computation graph. In the method, different computation graphs are asynchronously executed, so that an operator throughput on the device side is increased, and an overall running speed is improved.

Based on the foregoing operator processing method, this application provides an operator processing apparatus. The following describes the operator processing apparatus from a perspective of function modularization.

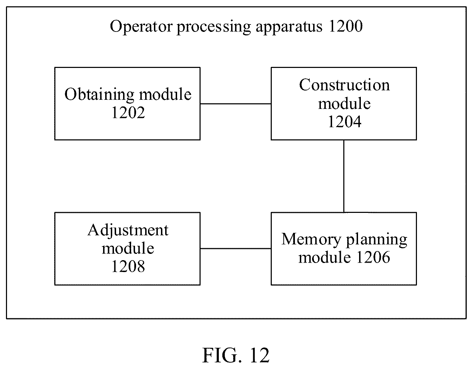

Referring to a diagram of a structure of an operator processing apparatus shown in FIG. 12, the apparatus 1200 includes:
an obtaining module 1202, configured to obtain topology information of a computation graph, where the topology information records a plurality of operators included in the computation graph, graph input data, graph output data, graph intermediate data, and a dependency relationship between the plurality of operators; and
a construction module 1204, configured to construct an operator execution queue based on the topology information of the computation graph, where each element in the operator execution queue corresponds to one operator in the computation graph and input data and output data of the operator, the input data of the operator is at least one of the graph input data or the graph intermediate data, the output data of the operator is at least one of the graph intermediate data or the graph output data, and an execution order of the plurality of operators in the operator execution queue is determined based on the dependency relationship between the plurality of operators.

The obtaining module 1202 is configured to implement related content of S302 in the foregoing method embodiment, and the construction module 1204 is configured to implement related content of S304 in the foregoing method embodiment.

The obtaining module 1202 and the construction module 1204 may be implemented by using software or hardware.

When the obtaining module 1202 and the construction module 1204 are implemented by using software, the obtaining module 1202 and the construction module 1204 may be application programs running on a computing device. For example, the construction module 1204 may be a computing engine running on the computing device. The application program may be provided as a virtualization service for a user to use. The virtualization service may include a virtual machine (virtual machine, VM) service, a bare-metal server (bare-metal server, BMS) service, and a container (container) service. The VM service may be a service of virtualizing a virtual machine (virtual machine, VM) resource pool on a plurality of physical hosts (for example, computing devices) by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely specific examples. During actual application, the virtualization service may alternatively be another lightweight or heavyweight virtualization service. This is not specifically limited herein.

When the obtaining module 1202 and the construction module 1204 are implemented by using hardware, the obtaining module 1202 and the construction module 1204 may include at least one processor, for example, a CPU. Alternatively, the obtaining module 1202 and the construction module 1204 may be devices implemented by using an application-specific integrated circuit (application-specific integrated circuit, ASIC), a programmable logic device (programmable logic device, PLD), or the like. The PLD may be implemented by using a complex programmable logic device (complex programmable logic device, CPLD), a field-programmable gate array (field-programmable gate array, FPGA), a generic array logic (generic array logic, GAL), or any combination thereof.

In some possible implementations, the construction module 1204 is further configured to:
number the graph input data, the graph output data, and the graph intermediate data by partition, where
each element in the operator execution queue records one operator in the computation graph, a number of input data of the operator, and a number of output data of the operator.

In some possible implementations, the apparatus 1200 further includes:
a memory planning module 1206, configured to: determine a size of a graph workspace based on shape information of the graph input data and a correspondence between the operator corresponding to each element in the operator execution queue, the input data of the operator, and the output data of the operator; and apply for a memory as the graph workspace based on the size of the graph workspace.

Similar to the construction module 1204, the memory planning module 1206 may be implemented by using software or hardware.

When the memory planning module 1206 is implemented by using software, the memory planning module 1206 may be an application program running on the computing device. For example, the memory planning module 1206 may be a computing engine running on the computing device. The application program may be provided as a virtualization service for the user to use. For example, the application program may be provided for the user by using the VM service, the BMS service, or the container service.

When the memory planning module 1206 is implemented by using hardware, the memory planning module 1206 may include at least one processor, for example, a CPU. Alternatively, the memory planning module 1206 may be a device implemented by using an application-specific integrated circuit ASIC, a programmable logic device PLD (for example, a CPLD or an FPGA), or the like.

In some possible implementations, the memory planning module 1206 is further configured to:
obtain shape information of the graph intermediate data and dependency information of the graph intermediate data, where the dependency information indicates an operator depending on the graph intermediate data; and determine an offset address of the graph intermediate data in the graph workspace and a size of the graph intermediate data based on the shape information of the graph intermediate data and the dependency information of the graph intermediate data.

In some possible implementations, the graph intermediate data includes first graph intermediate data and second graph intermediate data, and when an operator depending on the first graph intermediate data is executed before an operator outputting the second graph intermediate data, an offset address of the first graph intermediate data is less than or equal to an offset address of the second graph intermediate data.

In some possible implementations, the memory planning module 1206 is further configured to:
determine offset addresses of tiling parameters of the plurality of operators in the graph workspace and sizes of the tiling parameters of the plurality of operators; and
load the tiling parameters of the plurality of operators to the graph workspace based on the offset addresses of the tiling parameters of the plurality of operators in the graph workspace and the sizes of the tiling parameters of the plurality of operators.

In some possible implementations, the graph workspace is further provided with a scratch memory; and
the memory planning module 1206 is further configured to:
determine an offset address and a size of the scratch memory in the graph workspace based on a data amount of temporary data generated by execution of the plurality of operators.

In some possible implementations, scratch memories of the plurality of operators have a same offset address.

In some possible implementations, the computation graph includes a first computation graph and a second computation graph, operators included in the first computation graph are the same as operators included in the second computation graph, a dependency relationship between the operators in the first computation graph is the same as a dependency relationship between the operators in the second computation graph, and shape information of data in the first computation graph is the same as shape information of data in the second computation graph; and
the apparatus 1200 further includes:
an adjustment module 1208, configured to: when the first computation graph is executed, adjust an address of the graph input data to an address of graph input data of the second computation graph.

Similar to the obtaining module 1202 and the construction module 1204, the adjustment module 1208 may be implemented by using software or hardware.

When the adjustment module 1208 is implemented by using software, the adjustment module 1208 may be an application program running on the computing device. The application program may be provided as a virtualization service for the user to use. For example, the application program may be provided for the user by using the VM service, the BMS service, or the container service.

When the adjustment module 1208 is implemented by using hardware, the adjustment module 1208 may include at least one processor, for example, a CPU. Alternatively, the adjustment module 1208 may be a device implemented by using an application-specific integrated circuit ASIC, a programmable logic device PLD (for example, a CPLD or an FPGA), or the like.

In FIG. 12, the operator processing apparatus is described from the perspective of function modularization. The following describes the operator processing apparatus from a perspective of a physical implementation of hardware.

The operator processing apparatus may include at least one processor and at least one storage. The at least one storage stores computer-readable instructions. The at least one processor executes the computer-readable instructions, so that the operator processing apparatus performs the operator processing method in the foregoing embodiment.

The operator processing apparatus may be the computing device, for example, the server shown in FIG. 2. Further, the operator processing apparatus may alternatively be a computing device cluster formed by a plurality of computing devices, for example, a computing device cluster formed by a plurality of servers shown in FIG. 2. Storages of the plurality of computing devices in the computing device cluster may store same instructions used by the operator processing apparatus 1200 to perform the operator processing method.

In some possible implementations, the plurality of computing devices in the computing device cluster may alternatively be configured to execute partial instructions used by the operator processing apparatus 1200 to perform the operator processing method. In other words, a combination of the plurality of computing devices may jointly execute the instructions used by the operator processing apparatus 1200 to perform the operator processing method.

It should be noted that storages of different computing devices in the computing device cluster may store different instructions, to perform partial functions of the operator processing apparatus 1200.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the operator processing method applied to the operator processing apparatus 1200.

An embodiment of this application further provides a computer program product including instructions. The computer program product may be software or a program product that includes the instructions and that can run on a computing device or can be stored in any usable medium. When the computer program product runs on at least one computing device, the at least one computer device is enabled to perform the foregoing operator processing method.

Finally, it should be noted that the foregoing embodiments are merely used to describe the technical solutions of the present invention, but are not intended to limit the technical solutions. Although the present invention is described in detail with reference to the foregoing embodiments, persons of ordinary skill in the art should understand that they may make modifications to the technical solutions described in the foregoing embodiments, or perform equivalent replacement on some of the technical features. However, these modifications or replacements do not preclude the essence of the corresponding technical solutions from departing from the protection scope of the technical solutions of embodiments of the present invention.

## Claims

1. An operator processing method, wherein the method comprises:
obtaining topology information of a computation graph, wherein the topology information records a plurality of operators comprised in the computation graph, graph input data, graph output data, graph intermediate data, and a dependency relationship between the plurality of operators; and
constructing an operator execution queue based on the topology information of the computation graph, wherein each element in the operator execution queue corresponds to one operator in the computation graph and input data and output data of the operator, the input data of the operator is at least one of the graph input data or the graph intermediate data, the output data of the operator is at least one of the graph intermediate data or the graph output data, and an execution order of the plurality of operators in the operator execution queue is determined based on the dependency relationship between the plurality of operators.

2. The method according to claim 1, wherein the method further comprises:
numbering the graph input data, the graph output data, and the graph intermediate data by partition, wherein
each element in the operator execution queue records one operator in the computation graph, a number of input data of the operator, and a number of output data of the operator.

3. The method according to claim 1 or 2, wherein the method further comprises:
determining a size of a graph workspace based on shape information of the graph input data and a correspondence between the operator corresponding to each element in the operator execution queue, the input data of the operator, and the output data of the operator; and
applying for a memory as the graph workspace based on the size of the graph workspace.

4. The method according to claim 3, wherein the method further comprises:
obtaining shape information of the graph intermediate data and dependency information of the graph intermediate data, wherein the dependency information indicates an operator depending on the graph intermediate data; and
determining an offset address of the graph intermediate data in the graph workspace and a size of the graph intermediate data based on the shape information of the graph intermediate data and the dependency information of the graph intermediate data.

5. The method according to claim 4, wherein the graph intermediate data comprises first graph intermediate data and second graph intermediate data, and when an operator depending on the first graph intermediate data is executed before an operator outputting the second graph intermediate data, an offset address of the first graph intermediate data is less than or equal to an offset address of the second graph intermediate data.

6. The method according to any one of claims 3 to 5, wherein the method further comprises:
determining offset addresses of tiling parameters of the plurality of operators in the graph workspace and sizes of the tiling parameters of the plurality of operators; and
loading the tiling parameters of the plurality of operators to the graph workspace based on the offset addresses of the tiling parameters of the plurality of operators in the graph workspace and the sizes of the tiling parameters of the plurality of operators.

7. The method according to any one of claims 3 to 6, wherein the graph workspace is further provided with a scratch memory; and
the method further comprises:
determining an offset address and a size of the scratch memory in the graph workspace based on a data amount of temporary data generated by execution of the plurality of operators.

8. The method according to claim 7, wherein scratch memories of the plurality of operators have a same offset address.

9. The method according to any one of claims 1 to 8, wherein the computation graph comprises a first computation graph and a second computation graph, operators comprised in the first computation graph are the same as operators comprised in the second computation graph, a dependency relationship between the operators in the first computation graph is the same as a dependency relationship between the operators in the second computation graph, and shape information of data in the first computation graph is the same as shape information of data in the second computation graph; and
the method further comprises:
when the first computation graph is executed, adjusting an address of the graph input data to an address of graph input data of the second computation graph.

10. An operator processing apparatus, wherein the apparatus comprises:
an obtaining module, configured to obtain topology information of a computation graph, wherein the topology information records a plurality of operators comprised in the computation graph, graph input data, graph output data, graph intermediate data, and a dependency relationship between the plurality of operators; and
a construction module, configured to construct an operator execution queue based on the topology information of the computation graph, wherein each element in the operator execution queue corresponds to one operator in the computation graph and input data and output data of the operator, the input data of the operator is at least one of the graph input data or the graph intermediate data, the output data of the operator is at least one of the graph intermediate data or the graph output data, and an execution order of the plurality of operators in the operator execution queue is determined based on the dependency relationship between the plurality of operators.

11. The apparatus according to claim 10, wherein the construction module is further configured to:
number the graph input data, the graph output data, and the graph intermediate data by partition, wherein
each element in the operator execution queue records one operator in the computation graph, a number of input data of the operator, and a number of output data of the operator.

12. The apparatus according to claim 10 or 11, wherein the apparatus further comprises:
a memory planning module, configured to: determine a size of a graph workspace based on shape information of the graph input data and a correspondence between the operator corresponding to each element in the operator execution queue, the input data of the operator, and the output data of the operator; and apply for a memory as the graph workspace based on the size of the graph workspace.

13. The apparatus according to claim 12, wherein the memory planning module is further configured to:
obtain shape information of the graph intermediate data and dependency information of the graph intermediate data, wherein the dependency information indicates an operator depending on the graph intermediate data; and determine an offset address of the graph intermediate data in the graph workspace and a size of the graph intermediate data based on the shape information of the graph intermediate data and the dependency information of the graph intermediate data.

14. The apparatus according to claim 13, wherein the graph intermediate data comprises first graph intermediate data and second graph intermediate data, and when an operator depending on the first graph intermediate data is executed before an operator outputting the second graph intermediate data, an offset address of the first graph intermediate data is less than or equal to an offset address of the second graph intermediate data.

15. The apparatus according to any one of claims 12 to 14, wherein the memory planning module is further configured to:
determine offset addresses of tiling parameters of the plurality of operators in the graph workspace and sizes of the tiling parameters of the plurality of operators; and
load the tiling parameters of the plurality of operators to the graph workspace based on the offset addresses of the tiling parameters of the plurality of operators in the graph workspace and the sizes of the tiling parameters of the plurality of operators.

16. The apparatus according to any one of claims 12 to 15, wherein the graph workspace is further provided with a scratch memory; and
the memory planning module is further configured to:
determine an offset address and a size of the scratch memory in the graph workspace based on a data amount of temporary data generated by execution of the plurality of operators.

17. The apparatus according to claim 16, wherein scratch memories of the plurality of operators have a same offset address.

18. The apparatus according to any one of claims 10 to 17, wherein the computation graph comprises a first computation graph and a second computation graph, operators comprised in the first computation graph are the same as operators comprised in the second computation graph, a dependency relationship between the operators in the first computation graph is the same as a dependency relationship between the operators in the second computation graph, and shape information of data in the first computation graph is the same as shape information of data in the second computation graph; and
the apparatus further comprises:
an adjustment module, configured to: when the first computation graph is executed, adjust an address of the graph input data to an address of graph input data of the second computation graph.

19. An operator processing apparatus, wherein the apparatus comprises at least one processor and at least one storage, the at least one storage stores computer-readable instructions, and the at least one processor executes the computer-readable instructions, so that the operator processing apparatus performs the operator processing method according to any one of claims 1 to 9.

20. A computer program product, comprising computer-readable instructions, wherein the computer-readable instructions are used to implement the operator processing method according to any one of claims 1 to 9.
